# FASCICULE DE BREVET EUROPEEN

(11) **EP 2 034 256 B1**
(45) Date de publication et mention de la délivrance du brevet: **06.04.2011**
(21) Numéro de dépôt: 08163873.6
(22) Date de dépôt: 08.09.2008
(51) Int. Cl.: F25B 1/10, F25B 31/00, F25B 49/02

(54) **Procede et dispositif d'equilibrage d'huile entre compresseurs**
Vorrichtung und Verfahren zum Ölausgleich zwischen Verdichtern
Method and apparatus for equalizing oil between compressors

(30) Priorité: 07.09.2007 FR 0757432
(43) Date de publication de la demande: 11.03.2009
(73) Titulaire: Electricité de France, 75008 Paris (FR)
(72) Inventeur: Ritz, Jean-Benoît, 77250 Moret sur Loing (FR); Coevoet, Michel, 77810 Thomery (FR); Horber, Bernard, 77430 Champagne sur Seine (FR); Barbouchi, Sami, 75019 Paris (FR)
(74) Mandataire: Texier, Christian

(56) Documents cités:
- EP-A- 0 403 239
- EP-A- 0 961 091
- EP-A- 1 550 832
- JP-A- 4 356 665
- JP-A- 7 280 368

## Description

L'invention concerne le domaine des circuits thermodynamiques. Plus précisément, l'invention concerne un procédé d'équilibrage d'huile entre compresseurs.

Les circuits thermodynamiques, utilisés pour transférer de l'énergie thermique d'un point chaud à un point froid à l'aide de fluides caloporteur, utilisent la plupart du temps au moins un compresseur pour une phase de compression des fluides caloporteurs. Un compresseurs comprend des éléments mécaniques en mouvement qui obligent l'utilisation d'une huile de lubrification afin d'éviter la détérioration par frottement entre les pièces mécaniques en mouvement. Généralement, l'huile dans un compresseur, n'est pas séparée du fluide caloporteur ; nous désignerons donc, dans le document, par « carter » une partie du compresseur où l'huile est retenue.

Lors d'un fonctionnement d'un compresseur, une partie de cette huile s'échappe du compresseur et est emportée par le fluide caloporteur. Lorsqu'un circuit thermodynamique ne comprend qu'un seul compresseur, l'huile qui s'est échappée du compresseur lors d'un refoulement du fluide caloporteur, est emportée avec le fluide, effectue un cycle complet, revient à l'entrée du compresseur et réintègre celui-ci. Ainsi, si le circuit thermodynamique est correctement conçu pour favoriser le transport de l'huile dans le fluide caloporteur, il est facile en pratique d'arriver à un équilibre entre un débit d'huile évacué par le refoulement du compresseur et un débit d'huile de retour du circuit thermodynamique.

Cependant, lorsque plusieurs compresseurs sont montés en série, il arrive qu'un des compresseurs se vide de l'huile, et que celle-ci aille s'accumuler dans un carter d'un autre compresseur, ce qui peut aboutir à une détérioration du compresseur dont un niveau d'huile est descendu en dessous d'un seuil critique de fonctionnement.

Pour pouvoir rééquilibrer les niveaux d'huile, il existe plusieurs moyens. Dans des circuits thermodynamiques utilisant des compresseurs montés en série, les systèmes d'équilibrage d'huile existants sont basés sur des liaisons tubulaires reliant les carters des compresseurs, munies de valves à ouverture commandée ou régulée afin de ne pas mettre en communication directe les carters des compresseurs qui fonctionnent à des pressions différentes.

Par exemple, le brevet US 3,500,962 décrit un système comprenant une cuve centrale, stockant une réserve d'huile, qui alimente par le biais d'une pompe les carters de différents compresseurs. Mais ce système comprend un nombre important de vannes de régulation, ainsi que la présence de capteurs de niveau dans les compresseurs qui rendent cette réalisation, par 5 exemple, beaucoup trop coûteuse pour les circuits thermodynamiques utilisés pour les pompes à chaleur, réversibles ou non, destinés au secteur résidentiel ou tertiaire.

Ainsi, d'autres systèmes plus simples ont été présentés pour des compresseurs en série. Un tel système est décrit dans le document WO 2006/041682 A1, où il est prévu un compresseur basse pression « BP » et un compresseur haute pression « HP », chacun des compresseurs comprenant un carter, les deux carters étant reliés par un tube muni d'un clapet anti-retour normalement fermé. Lors de l'utilisation, le compresseur BP se remplit progressivement d'huile tandis que le compresseur HP se vide d'huile, à des vitesses plus ou moins rapides. Dans ce cas, le document prévoit d'arrêter d'abord le compresseur BP, ce qui va aboutir à ce que la pression présente dans le carter BP devienne légèrement supérieure à celle du carter du compresseur HP, la différence de pression étant liée à la perte de charge du circuit que prend le fluide caloporteur dans ce cas de fonctionnement. Cette différence de pression va «pousser» l'huile surabondante du carter du compresseur BP dans le carter du compresseur HP dès que l'on ouvre le clapet anti-retour. Néanmoins, cette perte de charge reste relativement faible pour pouvoir rééquilibrer rapidement les niveaux d'huile; or, dans certaines conditions de fonctionnement, en particulier lorsque le rapport pression de condensation / pression d'évaporation est élevé, il ne faut pas laisser le compresseur HP fonctionner seul à un régime de rotation nominal trop longtemps.

Le document JP 04356665 divulgue un procédé et un dispositif selon le préambule des revendications 1 et 4.

Un but de l'invention est de proposer un dispositif et un procédé permettant d'améliorer l'équilibrage d'huile entre différents compresseurs.

A cet effet, il est prévu un procédé d'équilibrage dynamique de l'huile dans un dispositif thermodynamique selon la revendicationl.Ainsi, durant le procédé d'équilibrage de l'huile, le compresseur haute pression ne fonctionne jamais seul à 100% de son régime de rotation.

Avantageusement mais facultativement, le dispositif comporte au moins l'une des caractéristiques suivantes :

Les compresseurs commencent une étape de décélération de régime de rotation sensiblement au même instant, mais durant la phase de décélération, le compresseur haute pression garde un régime de rotation plus élevé que le compresseur basse pression.
- Les compresseurs commencent une étape d'accélération de régime de rotation sensiblement au même instant, mais durant la phase d'accélération, le compresseur haute pression garde un régime de rotation plus élevé que le compresseur basse pression.
- L'invention concerne également un dispositif thermodynamique selon la revendication 4.

Avantageusement mais facultativement, le dispositif selon l'invention comprend au moins l'une des caractéristiques suivantes :
- Le dispositif comprend un variateur de vitesse destiné à faire fonctionner les compresseurs à des régimes de rotation variables.
- Le dispositif comprend une deuxième vanne destiné à empêcher une circulation du fluide caloporteur vers le compresseur haute pression.
- La deuxième vanne est située sur la liaison série.

D'autres caractéristiques, buts et avantages de la présente invention apparaîtront à la lecture de la description détaillée qui va suivre, au regard des dessins annexés, donnés à titre d'exemples non limitatifs et sur lesquels:
- La figure 1 présente un schéma d'un dispositif thermodynamique connu de l'art antérieur destiné à mettre en oeuvre un procédé selon l'invention,
- La figure 2 est un graphique représentant des profils de régime de rotation de compresseurs,
- La figure 3 est un graphique représentant d'autres profils de régime de rotation de compresseurs,
- La figure 4 présente un schéma d'un dispositif selon l'invention.

Dans la suite du document, nous entendrons par l'action d'ouverture d'une vanne, le fait de rendre cette vanne passante au sens où elle n'empêche pas une circulation d'un fluide. A contrario, nous entendrons par l'action de fermeture d'une vanne, le fait de la rendre non passante dans le sens où elle empêche la circulation d'un fluide.

Nous définissons également quatre états possibles pour un compresseur :
- Un état « en fonctionnement », signifiant que le compresseur se trouve en un état statique de fonctionnement.
- Un état « à l'arrêt », signifiant que le compresseur se trouve dans un état statique dans lequel il est complètement arrêté.
- Un état « en démarrage », signifiant que le compresseur se trouve dans un état dynamique transitoire d'un état « à l'arrêt » vers un état « en fonctionnement »
- Un état « en phase d'arrêt », signifiant que le compresseur se trouve dans un état dynamique transitoire d'un état « en fonctionnement » vers un état « à l'arrêt ».

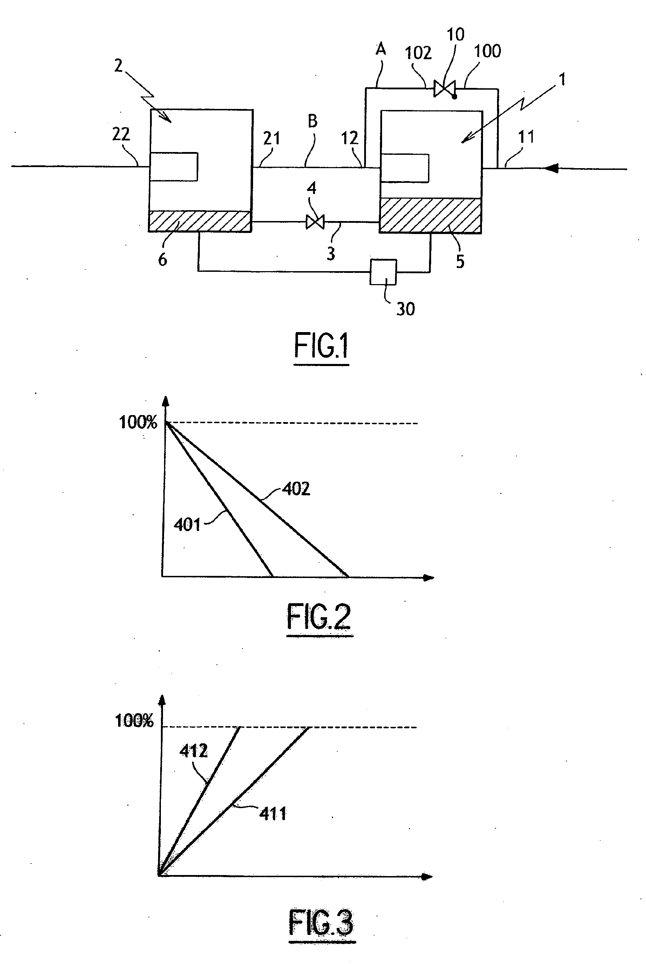

En référence à la figure 1, un dispositif thermodynamique, connu de l'état de l'art, comprend un compresseur 1 appelé « basse pression » (que nous dénommerons par la suite « BP »), comprenant une entrée 11 et une sortie 12, respectivement pour l'admission et le refoulement d'un fluide caloporteur, et un compresseur 2 appelé « haute pression » (que nous dénommerons par la suite « HP »), comprenant une entrée 21 et une sortie 22, respectivement pour l'admission et le refoulement du fluide caloporteur. Les deux compresseurs sont montés en série à l'aide d'une liaison série B (c'est à dire que l'entrée du compresseur HP est connectée à la sortie du compresseur BP par l'intermédiaire de la liaison série B). Généralement, par exemple dans une pompe à chaleur, le fluide caloporteur, qui provient d'un évaporateur (non représenté), est « aspiré » par le compresseur BP, subit une première étape de compression, puis il est aspiré par le compresseur HP via la liaison série B pour subir un deuxième étage de compression pour enfin être refoulé vers un condenseur (non représenté). Chacun des compresseurs comprend un carter, respectivement 5 et 6, pour une retenue de l'huile. Le dispositif comprend un tube 3 reliant les carters 5 et 6 des compresseurs 1 et 2, le tube 3 comprenant une vanne commandée 4. Le dispositif comprend également une liaison A de contournement pour le compresseur BP. Une liaison de contournement est une liaison qui relie l'entrée du compresseur à la sortie du compresseur, court-circuitant ainsi le compresseur sur le circuit thermodynamique. La liaison de contournement A comprend également un clapet anti-retour 10 qui empêche lors du fonctionnement du compresseur BP que le fluide en sortie du compresseur ne retourne, via la liaison de contournement A, vers l'entrée du compresseur BP. Ainsi, si la pression au niveau de l'entrée 100 du clapet 10 est supérieure à la pression au niveau de la sortie 102 du clapet 10, alors le clapet devient passant. Dans le cas contraire, le clapet 10 est non passant. La fonction de cette liaison de contournement est de permettre au compresseur HP 2 de fonctionner seul. En effet si le compresseur BP est éteint, le compresseur HP qui continue de fonctionner, « aspire » le fluide caloporteur de son entrée 21 créant ainsi une dépression dans la liaison série B et sur la liaison de contournement A, cette dépression provoque l'ouverture du clapet anti-retour 10 et par conséquence la circulation du fluide caloporteur via la liaison A, permettant ainsi au compresseur HP de fonctionner seul. Généralement, le compresseur HP comprend également une liaison de contournement et un clapet anti-retour (non représenté).

Lorsque les compresseurs sont en fonctionnement simultané (fonctionnement appelé mode biétagé), le compresseur BP peut se remplir progressivement d'huile tandis que le compresseur HP se vide d'huile, d'après un phénomène décrit précédemment.

Un procédé d'équilibrage entre les compresseurs 1 et 2 connu de l'état de l'art comprend donc les étapes suivantes :
- arrêter le compresseur BP,
- ouvrir la vanne 4,
- une fois l'équilibrage de l'huile effectué, arrêter le compresseur HP.

Le compresseur BP étant arrêté, le compresseur HP fonctionne seul grâce à la liaison de contournement A décrit précédemment. Or les pertes de charge du circuit emprunté par le fluide (c'est-à-dire A, B, 21) étant nettement supérieures aux pertes de charge du tube 3, une dépression au sein du carter 6 du compresseur HP est créée. Une fois la vanne 4 ouverte, cette dépression « aspire » directement l'huile du compresseur BP vers le compresseur HP au travers du tube 3 (la vanne 4 étant ouverte). Il est prévu de ne pas laisser la vanne 4 ouverte trop longtemps afin de ne pas amener le niveau d'huile du carter BP en dessous d'un niveau critique.

Cependant, dans le procédé décrit précédemment, seul le compresseur HP subit la différence de pression totale entre une pression de condensation (pression de sortie du compresseur HP) et la pression d'évaporation (pression d'entrée du compresseur BP), fonctionnant ainsi hors de la gamme nominale de pressions de fonctionnement du compresseur et réduisant alors la durée de vie de l'appareil.

En référence aux figures 2 et 3, nous allons décrire un procédé selon l'invention. Le dispositif comprend alors un variateur de vitesse 30 permettant un contrôle des régimes de rotation des compresseurs et notamment permettant de faire fonctionner les compresseurs à des régimes de rotation variables. Il est donc prévu un contrôle des régimes de rotation des compresseurs HP et BP, de telle manière que le compresseur HP ne fonctionne jamais seul à 100% de son régime de rotation nominal au démarrage ou en phase d'arrêt des compresseurs. Les régimes de rotation des compresseurs BP et HP sont contrôlés selon deux profils prédéterminés différenciés pour les compresseurs HP et BP. A cet effet, il est de faire entamer aux compresseurs une phase d'arrêt sensiblement au même moment, tel que, par la suite, le régime de rotation du compresseur HP soit constamment supérieur au régime de rotation du compresseur BP. En d'autres termes, la décroissance des régimes de rotation des compresseurs est telle que la courbe de régime de rotation du compresseur BP se situe en dessous de la courbe de régime de rotation du compresseur HP.

De la même manière, une autre variante du procédé d'équilibrage d'huile selon l'invention prévoit de démarrer les compresseurs sensiblement au même moment, tel que, par la suite, le régime de rotation du compresseur HP soit toujours supérieur au régime de rotation du compresseur BP. En d'autres termes, la croissance des compresseurs est telle que la courbe de régime de rotation du compresseur BP se situe en dessous de la courbe de régime de rotation du compresseur HP.

Sur les figures 2 et 3, sont représentées des courbes respectivement de décroissance et de croissance linéaire ; les coefficients directeurs des courbes de régime de rotation du compresseur HP en phase d'arrêt et au démarrage (respectivement 402 et 412) sont toujours supérieurs, en valeur absolue, aux coefficients directeurs des courbes de régime de rotation BP (respectivement 401 et 411). Bien entendu, les décroissances et/ou les croissances peuvent suivre un tout autre profil (hyperbolique, parabolique, exponentiel, linéaire par segment,... etc) sans sortir du cadre de l'invention.

Le compresseur HP fonctionnant toujours à un régime de rotation supérieur au compresseur BP, les raisonnements sur l'équilibrage d'huile restent les mêmes. Car même si le compresseur BP n'est pas arrêté, le compresseur HP fonctionne à un régime de rotation plus élevé et a donc besoin d'une pression du fluide caloporteur supérieure, ce qui crée une dépression au sein du compresseur HP. Cette dépression va « aspirer » l'huile du carter BP vers le carter HP via le tube 3 (la vanne 4 étant ouverte). Il est d'ailleurs prévu, selon l'invention, de connecter le tube 3, au niveau des carters, à un niveau supérieur à un niveau nominal d'huile, évitant ainsi que le niveau de l'huile ne descende en dessous de ce niveau nominal durant l'équilibrage de l'huile.

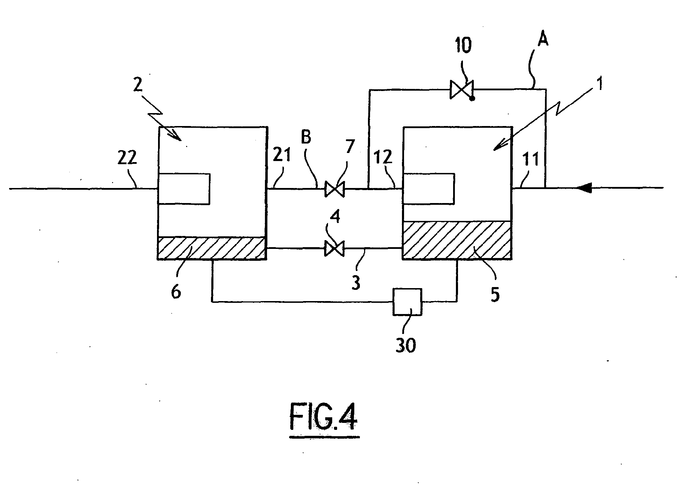

En référence à la figure 4, si l'équilibrage de l'huile doit être accéléré, il est prévu selon l'invention une deuxième vanne 7 situé sur la liaison série B entre les deux compresseurs.

Ainsi, dans le but d'accélérer l'équilibrage de l'huile, il est prévu pendant le procédé de maintenir la vanne 7 fermée pendant au moins une période durant laquelle le compresseur HP n'est pas arrêtée.

La fermeture de la vanne 7 a pour conséquence d'empêcher la circulation du fluide caloporteur de la sortie 12 du compresseur BP vers l'entrée 21 le compresseur HP. Ainsi, le compresseur HP étant toujours en fonctionnement mais ne pouvant plus « aspirer » le fluide, crée une dépression en son sein. L'arrêt du compresseur BP entraîne le fait que la pression au sein du compresseur BP est supérieure à la pression au sein du compresseur HP. Cette différence de pression va « pousser » l'huile surabondante du carter 5 du compresseur BP vers le carter 6 du compresseur HP au travers du tube 3 (avec la vanne 4 ouverte).

Alternativement, dans un cas où le compresseur HP se remplit progressivement d'huile tandis que le compresseur BP se vide de son huile, il est prévu selon l'invention d'ouvrir la vanne 4 pendant un fonctionnement des compresseurs. En conséquence de la différence de pression entre les carters HP et BP (lorsque les compresseurs fonctionnent simultanément), l'huile est « poussée » du carter HP vers le carter BP. Le temps d'ouverture de la vanne 4 doit être contrôlé afin que le niveau d'huile du compresseur HP ne soit pas inférieur à un seuil critique de fonctionnement.

Dans une autre variante du procédé selon l'invention, il est prévu de connecter le tube 3, au niveau des carters, au dessus d'un niveau d'huile minimum. La vanne 4 du tube 3 est simplement laissée ouverte lors du fonctionnement des compresseurs. Ainsi dés que le niveau de l'huile du carter HP est en dessous du tuyau 3, la simple pression du carter HP ne peut contrer un transfert d'huile (dû à la simple gravité) du carter BP vers le carter HP via le tube 3 (vanne 4 ouverte).

Il est évident que les procédés d'équilibrage de l'huile précédemment décrits sont tout aussi valables dans le cas d'un fonctionnement mono-étagé où le compresseur HP fonctionne seul (compresseur BP arrêté). Ainsi, le niveau d'huile du carter HP peut être à un niveau faible (dû, par exemple, à une utilisation précédente). Dans ce cas, le compresseur HP a besoin d'un transfert d'huile du carter BP vers le carter HP. Ainsi, il est possible de mettre en oeuvre un des procédés d'équilibrage d'huile précédemment décrits, mais dans lesquels, bien entendu, les étapes concernant le démarrage (ou l'arrêt) du compresseur BP ne sont pas pris en compte.

## Revendications

1. Procédé d'équilibrage dynamique d'huile dans un dispositif thermodynamique, le dispositif comprenant un compresseur basse pression (BP) monté en série avec un compresseur haute pression (HP) à l'aide une liaison série (B), chaque compresseur comprenant un carter (respectivement 5 et 6) pour la retenue d'huile, et un tube (3) reliant les carters des compresseurs, le tube (3) comprenant une vanne commandée (4), le procédé comprenant une étape d'ouverture de la vanne commandée **caractérisé en ce qu'**il comprend une étape de fonctionnement des compresseurs durant laquelle le compresseur haute pression (2) a un régime de rotation plus élevé que le compresseur basse pression (1) et durant laquelle le compresseur basse pression n'est pas arrêté.

2. Procédé selon la revendication 1, **caractérisé en ce que** les compresseurs (1,2) commencent une étape de décélération de régime de rotation sensiblement au même instant, mais que durant la phase de décélération, le compresseur haute pression (2) garde un régime de rotation plus élevé que le compresseur basse pression (1).

3. Procédé selon l'une des revendications précédentes, **caractérisée en ce que** les compresseurs (1,2) commencent une étape d'accélération de régime de rotation sensiblement au même instant, mais que durant la phase d'accélération, le compresseur haute pression (2) garde un régime de rotation plus élevé que le compresseur basse pression (1).

4. Dispositif thermodynamique comprenant un compresseur basse pression (BP) monté en série un compresseur haute pression (HP) à l'aide une liaison série (B) ; chaque compresseur comprenant un carter (respectivement 5 et 6) pour la retenue d'huile, et un tube (3) reliant les carters des compresseurs (1,2), le tube (3) comprenant une vanne commandée (4), **caractérisé en ce qu'**il comprend des moyens destinés à mettre en oeuvre un procédé selon l'une des revendications précédentes et **en ce que** le dispositif comprend une liaison de contournement (A) du compresseur basse pression (1), la liaison de contournement (A) comprenant un clapet anti-retour (10).

5. Dispositif thermodynamique selon la revendication précédente **caractérisé en ce qu'**il comprend un variateur de vitesse (30) destiné à faire fonctionner les compresseurs (1,2) à des régimes de rotation variables.

6. Dispositif thermodynamique selon la revendication 4 ou 5, **caractérisé en ce qu'**il comprend une deuxième vanne (7) destiné à empêcher une circulation du fluide caloporteur vers le compresseur haute pression (2).

7. Dispositif selon la revendication 6, **caractérisé en ce que** la deuxième vanne (7) est située sur la liaison série (B).

8. Dispositif selon les revendications 4 à 7, **caractérisé en ce que** le premier tube (3) est connecté à un niveau supérieur à un niveau d'huile nominal.

## Claims

1. A method for dynamically equalizing oil in a thermodynamic device, the device comprising a low pressure compressor (BP) series-connected with a high pressure compressor (HP) via a serial link (B), each compressor comprising a casing (5 and 6 respectively) for oil retention and a tube (3) connecting the casings of the compressors, the tube (3) comprising a controlled valve (4), the method comprising a step involving opening the controlled valve **characterised in that** it comprises a step involving operating the compressors, during which the high pressure compressor (2) operates at a rotational speed faster than that of the low pressure compressor (1) and during which the low pressure compressor is not switched off.

2. A method according to claim 1, **characterised in that** the compressors (1, 2) begin a step involving decelerating the rotational speed at substantially the same time, however **in that** during the deceleration phase, the high pressure compressor (2) maintains a rotational speed faster than that of the low pressure compressor (1).

3. A method according to one of the previous claims, **characterised in that** the compressors (1, 2) begin a step involving accelerating the rotational speed at substantially the same time, however **in that** during the acceleration phase, the high pressure compressor (2) maintains a rotational speed faster than that of the low pressure compressor (1).

4. A thermodynamic device comprising a low pressure compressor (BP) series-connected with a high pressure compressor (HP) via a serial link (B); each compressor comprising a casing (5 and 6 respectively) for oil retention and a tube (3) connecting the casings of the compressors (1, 2), the tube (3) comprising a controlled valve (4), **characterised in that** it comprises means intended to implement a method according to one of the previous claims and **in that** the device comprises a bypass line (A) bypassing the low pressure compressor (1), the bypass line (A) comprising a check valve (10).

5. A thermodynamic device according to the previous claim **characterised in that** it comprises a variable speed drive (30) intended to operate the compressors (1, 2) at variable rotational speeds.

6. A thermodynamic device according to claim 4 or 5, **characterised in that** it comprises a second valve (7) intended to prevent the circulation of coolant to the high pressure compressor (2).

7. A device according to claim 6, **characterised in that** the second valve (7) is located on the serial link (B).

8. A device according to claims 4 to 7, **characterised in that** the first tube (3) is connected at a level higher than a nominal oil level.

## Patentansprüche

1. Verfahren zum dynamischen Ölausgleich in einer thermodynamischen Vorrichtung, wobei die Vorrichtung umfasst: einen Niederdruckkompressor (BP), der mittels einer Serienverbindung (B) in Reihe mit einem Hochdruckkompressor (HP) verbunden ist, und wobei jeder Kompressor ein Gehäuse (5 bzw. 6) zur Speicherung von Öl umfasst, und ein Rohr (3), welches die Kompressorgehäuse miteinander verbindet, und wobei das Rohr (3) ein Steuerventil (4) umfasst, und wobei das Verfahren einen Schritt des Öffnens des Steuerventils umfasst und **dadurch gekennzeichnet ist, dass** es einen Schritt des Betriebs der Kompressoren umfasst, während dessen der Hochdruckkompressor (2) eine Drehzahl aufweist, die über der des Niederdruckkompressors (1) liegt und während dessen der Niederdruckkompressor nicht angehalten wird.

2. Verfahren gemäß Anspruch 1, **dadurch gekennzeichnet, dass** die Kompressoren (1, 2) in etwa dem gleichen Moment mit einem Schritt der Drosselung der Drehzahl beginnen, wobei jedoch während der Drosselungsphase der Hochdruckkompressor (2) eine höhere Drehzahl beibehält als der Niederdruckkompressor (1).

3. Verfahren gemäß einem der vorhergehenden Ansprüche, **dadurch gekennzeichnet, dass** die Kompressoren (1, 2) in etwa dem gleichen Moment mit einem Schritt der Beschleunigung der Drehzahl beginnen, wobei jedoch während der Beschleunigungsphase der Hochdruckkompressor (2) eine höhere Drehzahl beibehält als der Niederdruckkompressor (1).

4. Thermodynamische Vorrichtung, umfassend einen Niederdruckkompressor (BP), der mittels einer Serienverbindung (B) in Reihe mit einem Hochdruckkompressor (HP) verbunden ist, wobei jeder Kompressor ein Gehäuse (5 bzw. 6) zur Speicherung von Öl umfasst, und ein Rohr (3), welches die Kompressorgehäuse (1, 2) miteinander verbindet, wobei das Rohr (3) ein Steuerventil (4) umfasst, **dadurch gekennzeichnet, dass** die Vorrichtung Mittel umfasst, die zur Durchführung eines Verfahrens gemäß einem der vorhergehenden Ansprüche bestimmt sind, und dass sie eine Umgehungsverbindung (A) des Niederdruckkompressors (1) umfasst, wobei die Umgehungsverbindung (A) ein Rückschlagventil (10) umfasst.

5. Thermodynamische Vorrichtung gemäß dem vorhergehenden Anspruch, **dadurch gekennzeichnet, dass** sie einen Geschwindigkeitsvariator (30) umfasst, der dazu bestimmt ist, die Kompressoren (1, 2) mit veränderlichen Drehzahlen laufen zu lassen.

6. Thermodynamische Vorrichtung gemäß Anspruch 4 oder 5, **dadurch gekennzeichnet, dass** sie ein zweites Ventil (7) umfasst, das dazu bestimmt ist, eine Zirkulation eines Kühlmittels in Richtung Hochdruckkompressor zu verhindern.

7. Vorrichtung gemäß Anspruch 6, **dadurch gekennzeichnet, dass** das zweite Ventil (7) in der Serienverbindung (B) angeordnet ist.

8. Vorrichtung gemäß den Ansprüchen 4 bis 7, **dadurch gekennzeichnet, dass** das erste Rohr (3) auf einem Niveau angeschlossen ist, das höher als der Nominalölstand ist.
